# EUROPEAN PATENT APPLICATION

(11) **EP 1 217 545 A1**
(43) Date of publication of application: **26.06.2002**
(21) Application number: 00620003.4
(22) Date of filing: 22.12.2000
(51) Int. Cl.: G06F 17/30

(54) **System for and method of data synchronization**

(71) Applicant: Dataevents Cyprus Limited, PC 1075 Nicosia (CY)
(72) Inventor: Burden, Richard, Great Missenden Buckinghamshire HP16 9PO (GB)
(74) Representative: Schmidt, Steffen J., Dipl.-Ing.

(57) **Abstract**

The present invention teaches a data management system for data synchronization comprising at least one computer having an operating system that supports remote and or local procedure calls and allows two or more application software tasks being executed on at least on of said computers. At least one of said application software tasks is of a first type being adapted to transmit data through said operating system, while at least one of said application software tasks is of a second type being adapted to receive data through said operating system. An addressable data storage structure allocated to said data management system is used for synchronizing said data and allocated to said at least one of said first type application software tasks, utilizing a schema-free definition. Said addressable data storage structure is adapted to comprise at least one list of subscriptions. Each of said subscriptions characterizes data from said data storage structure at a level of data detail pre-definable by said at least one of said second type application software tasks. Such data is disseminated from said at least one first type application software task to said at least one second type application software task at said predefined level of data detail for said at least one second type application software task in accordance with the occurrence of a predefined event.

## Description

### Field of the Invention

The present invention is related to a data management system and method wherein data is disseminated between software application tasks for synchronization purposes. More specifically, it is related to a system where two or more software application tasks are executed on one or more computers connected by a data network like the World Wide Web, wherein the software application tasks have access to data being allocated for each thereof and associated with each other.

### Related Prior Art

The World Wide Web represents all of the computers on the Internet that offer users access to information on the Internet via interactive documents or Web pages. Web information resides on Web servers on the Internet or within company or community networks (intranets).

US Patent 6,038,061 discloses the use of the World Wide Web and wide-area networks by managing groups of network objects (content or applications) and bringing content from servers to users' desktops. This prior art system acts as an intermediary and mediator between end users, and content providers.

So far, the main focus has been on the World Wide Web and browser based technology to allow users to access databases. This tends to force users into channeled, single tasked activities. For example, a user requiring to track a package on the web manually connects to the web site of the parcel service, types in the package number, presses a button and waits for the query to execute. More detail on the results may require more double-clicking. The constant need for the browser to refresh data from the parent data server (the web site server) makes this a very time consuming operation. If the user wishes to execute several more queries, for example finding the current stock quotation, checking the status of a book order and the availability of a flight, several hours of user time can be wasted for the equivalent of a couple of seconds of net computer time.

Moreover, businesses are beginning to appreciate the power of a global network, that places them in direct connection not only with their customers but also with their suppliers. In effect the larger companies are either putting their bids out to the market or requiring the market to come to them with their best asking price. Large amounts of money are expected to be saved in this way.

Businesses are also increasingly able to deploy the power of connectivity to plan, execute and manage their essential internal functions - which has led to growth in the use of Corporate Information Portals or Intranets.

However the ever growing number of network users combined with network bandwidth not increased at the required rate has resulted in counter-productive waiting times, especially at 'internet rush hours', when significant amounts of work time are spent just waiting for the computer connected to the network to respond. This problem is caused by the inefficient method of data supply from the sources to the querying recipients (users).

Web-based Databases, including Intranets utilise either server/client or on peer-to-peer architectures. Server/client architectures rely on powerful servers (storage capacity, processor power and network access bandwidth) hosting the database connected toless powerful clients (significantly less storage capacity, processor power) or simple net-devices.. Clients submit queries to the server where the search is carried out and the result is sent back to the respective client. In contrast thereto, peer-to-peer architectures rely on substantially similar powerful peers among which the database is shared.

In the past, object databases have relied on relational databases with an associated database schema and a query language creating a client server model. Recently, real-time data broadcast systems have been developed for specific, proprietary requirements, which are not truly suitable for multiple, sometimes even contradicting market requirements.

A schema defines and describes a class of objects by using constructs to constrain and document the meaning, usage and relationships of their constituent parts: data types, elements and their content, attributes and their values, entities and their contents and notations. Schema constructs may also provide for the specification of additional information such as default values.

The schema requirement of object databases results in great inflexibility in implementation. Any schema changes mean that the client programs must be recompiled. In addition, multiple versions of the database objects must be maintained to support legacy applications. Trigger mechanisms in these databases and also in traditional relational databases are very limited and must be predefined in the database engine itself. Therefore, database users can not define the amount of data or specify a set of objects or object properties that they are specifically interested in. In addition, the triggers are limited to the local computer (server) unless a special software program is written to forward the trigger events to the respective remote client computers.

Although various real time data distribution systems exist today, they are restricted to either broadcast all changing data as a data feed or require the data to be modeled to fit the exact template of the client application. This means that the real time data distribution system either overloads the subscribing client applications with un-necessary data or bends a real world data model into an inflexible arrangement suiting the real time data system (rather than the user of that data model).

Object databases or real time data systems rarely link directly into end user application programs such as spreadsheets, word processors, user mode databases or visual programming languages in a versatile, user-friendly and easily-adaptable manner. Consequent to that, highly specialist consultants, designers and software engineers are create such object databases or real time data systems. Rapid prototyping is impossible in such systems and redesigning of applications is very difficult and time consuming.

Independently from the question of client/server or peer-to-peer environments, the typical Internet configuration supports client-to-content-provider interaction. On connecting to the Internet, a user requests objects from a content provider. The required information is located through manual or automatic searches and the client then retrieves the data.
When searching for the data initially, in this "pull" model, the client machine has the responsibility for finding and downloading data as desired. The user is forced constantly to scour the Web for various information sites and then to download information from the Internet.

However the content providing server is inherently passive, and in the "pull" model, only responds to a client request for data. Therefore there is no efficient way for the user in the 'pull' model to know about subsequently updated information of interest distributed by the server, except to check manually and periodically for the same. This cumbersome mechanism renders the "pull" model a very ineffective way to find continuous information on the web.

However, information is a critical factor enabling critical decisions in successful businesses, successful private and public enterprises and the management of domestic finances and lifestyles. It is therefore vital to facilitate the dissemination of real time data over the Internet and corporate Intranets by a system that is content independent, scalable, reliable, and secure.

### Object of the Present Invention

The object to be solved by the present invention is the ever growing requirement for Internet or Intranet systems to operate efficiently and reliably as a transport system which will transfer, update, and synchronize data in a fast, versatile and secure manner between all participants, e.g. client applications/systems, computer applications/systems, software applications, applications software tasks, etc., and combinations thereof, interested in some or the entirety of said data. Likewise, the invention is also applicable to a situation where more than one application software program is being executed on the same (local) computer where data is to be interchanged between these application software programs efficiently.

### Solution according to the present invention

The present invention teaches a data management system for data synchronization comprising at least one computer having an operating system that supports remote and or local procedure calls and allows two or more application software tasks being executed on at least on of said computers. At least one of said application software tasks is of a first type being adapted to transmit data through said operating system, while at least one of said application software tasks is of a second type being adapted to receive data through said operating system. An addressable data storage structure allocated to said data management system is used for synchronizing said data and allocated to said at least one of said first type application software tasks. Said addressable data storage structure is adapted to comprise at least one list of subscriptions. Each of said subscriptions characterizes data from said data storage structure at a level of data detail pre-definable by said at least one of said second type application software tasks. Such data is disseminated from said at least one first type application software task to said at least one second type application software task at said predefined level of data detail for said at least one second type application software task in accordance with the occurrence of a predefined event.

The present invention can either be utilized on a single (stand alone) computer to have two or more application programs exchange data in a very effective and versatile manner. Alternatively, the present invention can be used to interchange data between two or more computers in a network environment. Thus, it is possible to request data ad-hoc (e.g. database type requests) or by client-side initiated synchronization.

Further, it is contemplated said at least one first type application software task is also capable of receiving data, while said at least one second type application software task can transmit data through said operating system. Data being stored in said addressable data storage structure is allocated to said at least one second type application software task. This data can comprise the data allocated to said at least one first type application software task or be comprises by the same. Here, said addressable data storage structure further comprises at least one list of subscriptions being indicative of at least one data detail level with respect to said addressable data storage structure pre-defined by said at least one first type application software task. In case, an event related to said data allocated to said at least one second type application software task occurs, it is determined whether this event is related to data characterized by a respective one of said at least one pre-defined data detail level of said at least on first type software application task. Given such an event, data is disseminated from said at least one second type application software task to said at least one first type application software task at respective one of said levels pre-defined by said at least one first type application software task.

It is preferred, that data is interchanged between said at first type and second type application software tasks in accordance with respective ones of said at least one list of data characterizing subscriptions

All modern operating systems (Windows, Linux, Unix or the like) have multitasking capabilities and support remote and or local procedure calls (RPC or LPC) or procedure invocations, whereby the procedure to be executed may be transferred to the said operating system via the network. RPCs and LPCs provide the ability of one task to execute publicly visible code/procedures in another application on the same computer (that is a LPC) or on a remote computer in the network (that is a RPC). This mechanism allows for a very effective notification of another application software task that a certain event has occurred (e.g. that some data has changed, or the like).

The data sources from which the application software tasks receive data through said operating system are other application software tasks on the same computer and/or content providers or other application software tasks in the network to which the local computer is connected. Another type of source are input devices providing information/data to the local computer like keyboards, mouse's, microphones, video cameras, data acquisition hardware, mobile phones, "blue tooth" devices, household equipment, car management systems, sensor devices (smoke, fire, water,...), etc.

The addressable data storage structure allocated to said data management system is used for storing and retrieving said data. The system according to the present invention is completely content independent. It handles the transfer of data and notification of changes but makes no assumption of the nature of the data. The data can be aggregated in collections of objects or used as single objects. Each object has a designation and a collection of properties associated with it. Each property has a collection of one or more values. The values may take many forms: text, numbers, pointers to other objects, pointers to files, database mappings or pointers to streaming video or audio. There are virtually no limits or restrictions on the data that is carried by an object or their size. Possible limitations are obviously hardware limitations rather than software limitations. Real time data in the context of this invention is data that changes over time, whether the time period is a fraction of a second or several months.

A certain type of value stored in said addressable data storage structure is a list of subscriptions adhered to a property. Each of said subscriptions comprises a recipient name for data from said data storage structure. Moreover, each of said subscriptions comprises - attached to said recipient name - a predefined level of data detail. This level of data detail defines the "granularity" of the data to be submitted by the system according to the invention upon occurrence of a predefined event. This predefined event can either be the fact that the information to which the user has subscribed has changed (at a certain level of detail) or that a certain period of time has lapsed since the last submission, etc.

Thus, it is possible to have data recipients (i.e. application software tasks acting as subscribers to a source of data or a database) to register and obtain any property or content of any object in the database at precisely the level of detail particular for the respective data recipient and upon exactly the event defined by the data recipient.

Further, it is possible to have the object database call a function in the data recipient's application software program whenever the object property changes at the database.

Effectively, each object present in the system according to the invention can receive or cause events. These events trigger application software tasks either on the same computer and/or on computers in the network to perform some function on a certain object as the data changes.

By the same virtue, the invention provides for a reliable distribution infrastructure for synchronizing the set of data present at a number of data recipient's application software programs by generating and sending out the data to all the data recipients interested in being notified of an updated version of said data and having subscribed accordingly.

This data management system allows for providing a schema-free definition of object-models and is capable of storing and disseminating objects having properties of any data type (e.g. alphanumeric, multimedia, cross process and cross machine execution pointers, etc.).

In a relational database it is a prerequisite that the structure of the table (schema) is predefined not only in terms of the number of columns (or the properties) of a record but also the nature of the columns, data type, data precision, date size, etc. In many object databases it is a requirement that a schema must be written to define the attributes of the objects before a client application can access them. Moreover, if the attributes of the objects change then multiple schemas must exist in order to support both legacy and new applications.

According to the invention, the data is only sent to a data recipient or specific subscriber at the level of detail defined by the data recipient or desired by the subscriber, respectively. Moreover, it is possible to update real-time data in HTML pages in a web browser as they occur without requiring the complete HTML page being refreshed from the server via the network. Thus, the amount of overall data traffic is significantly reduced in comparison to prior art solutions where all subscribers of a real-time database receive the complete object. As a result, such a conventional transmitted complete object can include to much or to less data with respect to a specific user.

Once the data has arrived at the destination (e.g. data recipient, data storage) an event driven mechanism alerts client applications to process the new data.

The system according to the present invention allows for delivering and displaying rapidly changing data without causing web page reloads from Web servers. By virtue of the invention, Web pages are updated automatically but only the changed data is "redrawn" by the browser of the user.

This facility means that neither the application software designer nor the central database system designer nor any user of the system have to provide a special code/program to interrogate or query the database when changes occur. Thus, the in-built distribution infrastructure means that the designer of a database application software program can concentrate on the real world model underlying the intended application software rather than the problems of distributing the database and its contents.

The present invention allows for a direct integration of the object database and event system with application software programs and/or visual programming languages. This means that complete systems can be designed and implemented very rapidly, and by designers with a much lower degree of technical knowledge but a much higher degree of business, market and application knowledge. This will lead to systems that are designed by people who understand the business of their organization rather than technical engineers who understand programming but not the business.

In the system according to the present invention, data objects are based on a "Publish" and "Subscribe" model. Each product comprising one or more objects is hosted by one or more server installations or product owners. Typically the product owner will load the shape of the product (i.e. the active objects and their properties) either from a corporate database or from the object database. The subscriber locates the product owner through a network wide broker and then creates a local subset of the objects in which the subscriber is interested.

Objects are updated through client or server machines by publishing the data to the product owner which in turn updates the distributed objects. Client and server application interested in specific data changes can subscribe to an object collection, an object, a property collection, or an individual value. When any of these changes, the client having subscribed thereto is notified by an issued trigger event. The event handling mechanisms in the system cause the relevant piece of code in the client application to be executed. This may cause a display application to update and highlight the change or a calculating application to recalculate and analysis based on the new data.

Data may be published locally so that a corporate algorithm is triggered by external data (e.g.. an option price) but the results are only made available and published within the corporate Intranet. Such a data trigger could initiate an automated event of an order placement on the designated supplier on the suppliers extranet.

Client applications subscribe to a level within the object hierarchy. Whenever the subscribed item changes then the client is notified via an event. Thus, only the relevant, i.e. the modified data is submitted to the subscriber. This significantly reduces the data traffic volume in the network. The greater the depth in the hierarchy the more granular is the event. The depth can be hierarchically defined by parameters being indicative of ObjectCollections, Objects, Properties and/or Values.

All events are multiplexed within the object hierarchy. At the top level, a client can subscribe to the object collection itself and be informed via a single event of any change anywhere within the model. Subscriptions lower down the hierarchy will signal more specific events and a consequent reduction in the data transfer.

A single installation of objects according to the invention can support multiple simultaneous products sourcing data from different Internet or Intranet sites. To ensure that the installation sources the data from the correct place, a number of objects brokers, and/or the like are installed on the network. These act as databases of product names, descriptions, network addresses, etc. Once the location of the product has been obtained (e.g. from a broker), respective object (collections) are sourced directly from the product owner or owners. Objects (collections) may be updated by any validated member of the product mesh for example a client sitting at an exchange may update financial objects of a product owner in a different continent. This process requires a setup phase, e.g. for initially distributing date/information for carrying out the invention, e.g. such as a local object creation. Then a dynamic update phase can be accomplished to disseminate data according to the invention.

The functionality of the objects according to the present invention is built into an automation server which is responsible for local object creation, collection management and communication with the global objects of the type according to the invention. Events fired by the objects may be fired directly from the component object to the client application or multiplexed into the automation server which then fires a single generic event containing the identification of the firing object to a number of subscribers.

According to the invention, objects can communicate with each other synchronously when data is required immediately as a snapshot and/or asynchronously dependent on external events. A communication layer is separate from the objects and so can be replaced with any subsystem appropriate for the intended application.

For example, a simple product may just require HTTP tunneling whereas a security sensitive application would use an encrypted secure socket connection. According to the invention objects can carry access control lists (ACLs) which determine an intended and/or possible utilization of an object by specific application.

An authentication subsystem which can be e.g. a part of the product broker issues a "security token" to the client. This token is used to determine whether a client can add or delete objects and read or write object properties.

Changes in the application software do not require any change in the underlying database structure or table format.

According to the invention, objects can contain references to other objects and compound architecture can be created.

The present invention operates on the presumption that data is stored and/or processed in a structured (e.g. hierarchical) manner. The system of the present invention provides a data manager capable of composing data objects into a structured (hierarchical) collection of objects formed into collections, with the objects forming an interest based event driven real time object database. The objects are either held in the data storage structure of one (local) computer or, if the computer is connected to a network, held in a data storage structure for different computers in the network. Here, it is possible to interconnect objects by pointers, and the like.

The system according to the invention significantly facilitates the design of database application software programs since the application software designer is free to design cooperating applications each making use of the data stored and distributed by the object database and to change this data structure without having to redesign the underlying database structure or table format. No special code/program is required either in the data consumer or provider or object database engine to translate or modify data since it is stored and disseminated in the data type of the first or subsequent updates to the database.

Further, the present invention allows for the object database to register a data consumer's interest in changes for an object or object collection. When such a change occurs, the system according to the present invention (i.e. the database where the change occurred) can automatically interrupt the data consumer's thread of execution by calling a user-defined procedure with the parameters of the change to the object of interest, can provide suitable information for notification of a user, and the like.

The object database allows the system designer to create and combine products, object collections, objects, properties, and property values in any manner to exactly mimic the real world model. This saves huge amounts of time traditionally expended in remodeling and normalizing a database to fit within the database constraints rather that what the designer wishes the database to do.

According to the present invention, the local object database requires only a single connection to an upstream or master database. In this manner, a single update to an object can be multicast via the event mechanism to all interested client applications. This feature significantly reduces the connection and bandwidth requirements which cause problems with conventional systems. Additionally, any instance of the object database can act as a proxy server. For example, an organization can distribute a remote database and associated update events throughout its own local area network infrastructure using a single external connection.

According to the invention, each object collection can comprise a head of a product which contains one or more object collections, each containing one or more objects. An object has a collection of properties associated with it. Each property has a value which may be of any base data type, an array, a dispatch pointer to another object, a pointer to an ActiveX control or automation server.

With the system of the present invention, any number of products can be instantiated within a running objects system. A product is defined as an owner product if the local machine is the ultimate repository of the data or a user product if the product is remote.

Owned products can have an associated listener which handles connections from clients interested in the product. User or client applications can have a connector instance which communicates with the product owner.

According to the present invention, any application software across the network can register an interest in Properties of the Objects. As and when a Property Value changes the client application is notified by means of an event. An event can be synchronous remote and/or local procedure calls and/or procedure invocations (as defined above) into the client application by the system according to the invention located on the Objects server and thus delivers real time updates directly to the client application.

Client applications can be written in any language including but limited to C++, Office VBA, Visual Basic, Java & Scripting Languages.

For owned products it simply requires defining the listener port and specifying an object database file to load when the product starts.

For user products configuration consists of either specifying that a broker should be used to locate the products or by hard coding the location of the product. An optional user name and password can be used for security.

The data management system and data management method according to the present invention, and preferred embodiments thereof are defined in the accompanying claims.

### Short Description of the Figures

In the following description of preferred embodiments it is referred to the accompanying figures, wherein:
Fig. 1 schematically illustrates a computer network in which the system according to the present invention can be utilized,
Fig. 2 schematically illustrates a hierarchy used for the addressable date structure of the system according to the present invention,
Fig. 3 schematically illustrates interconnections and a replicating nature of components for the system according to the present invention,
Fig. 4 schematically illustrates a flow of events in the system according to the present invention,
Fig. 5 schematically illustrates an example for data storing and dissemination in the system according to the invention, and
Fig. 6 schematically illustrates a process of identifying a location of a product according to the present invention.

### Description of Preferred Embodiments

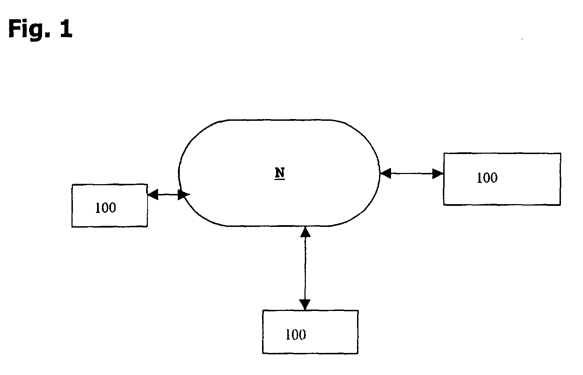

Fig. 1 shows a network N (e.g. the Internet or an Intranet) having a number of computer systems 100 connected to it. To this end, each of the computer systems 100 includes a network device for connecting computer system 100 to the network N. Such network devices for connecting the computer systems to the network include Ethernet devices, data modems, ISDN adapters, and other known network devices.

A preferred embodiment of the present invention is implemented as a software module, which may be executed on a computer system such as computer system in a conventional manner. Using well known techniques, the application software of the preferred embodiment is stored on data storage media of the computer systems 100 and subsequently loaded into and executed within the computer systems 100. Once initiated, the software operates in the manner described below.

The computer systems 100 execute software applications, each thereof executing at least one common application software task. The common application software tasks provide a function being substantially the same for all computer systems 100.

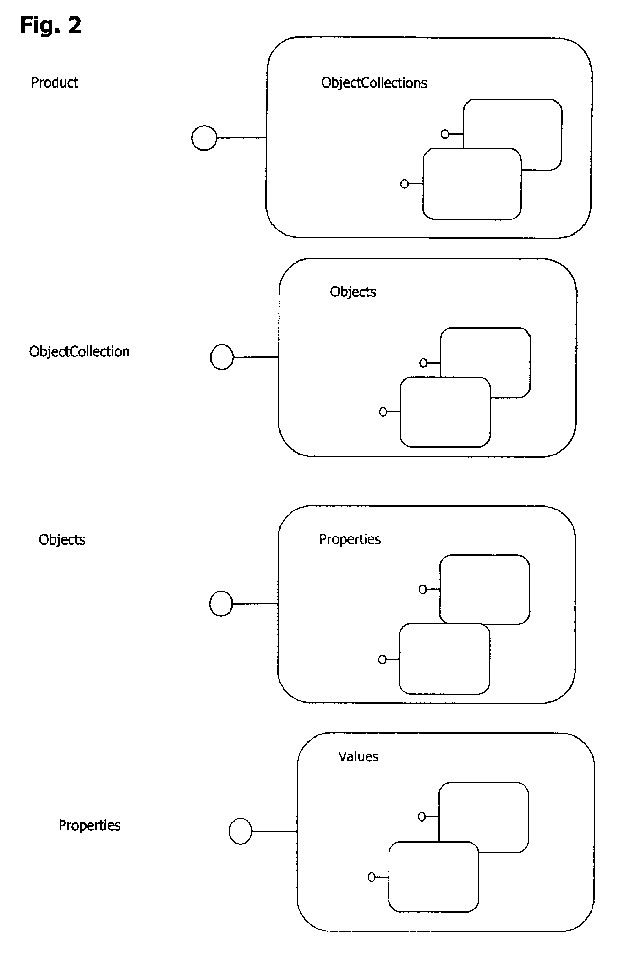

Fig. 2 illustrates a hierarchy used for the addressable data structure according to the invention. The top level is comprised by data referred to as product. Each product comprises at least one so-called object collections which form the next data detail level. At least one data called object is comprised by each object collection, wherein objects represent the second lowest data detail level. The lowest detail level includes data called properties, wherein each properties comprises at least one value. The data named values can be of any base data type, a data/information array, pointers and the like, alphanumerical data, graphical data, multimedia data, etc.

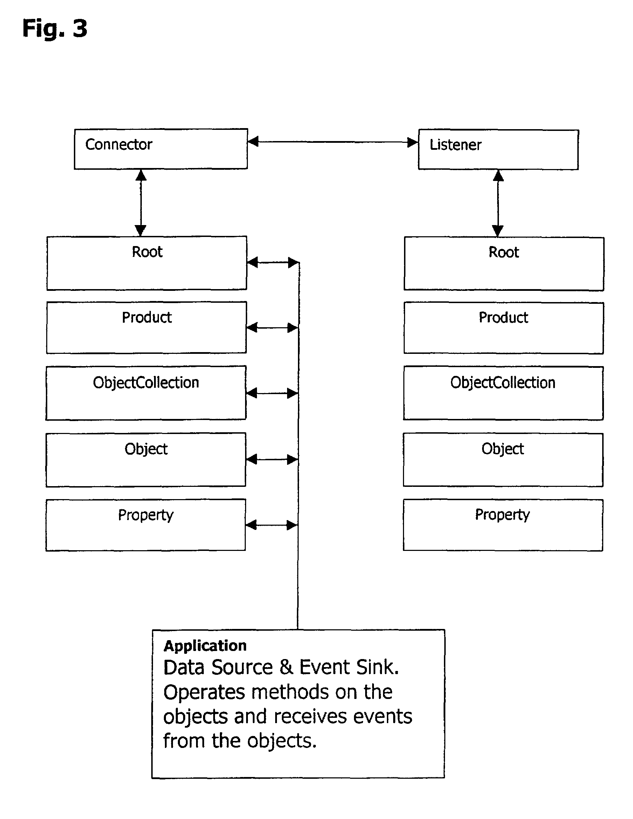

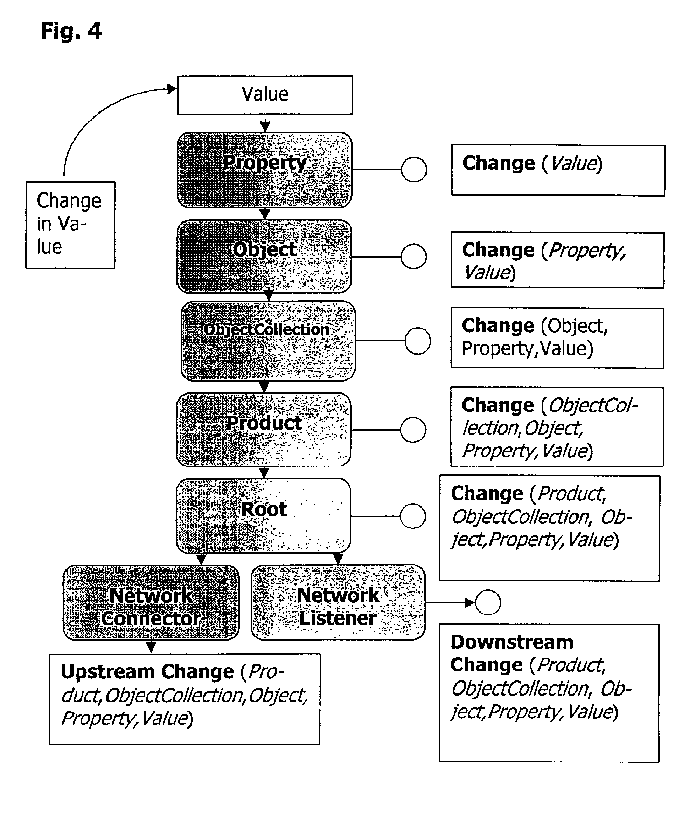

The following sections describe components used for the system according to the present invention with documentation on their properties, methods and events. The interconnection and the resulting replicating nature of these components will become apparent from the following description read in combination with Fig. 3 and 4.

It should be noted that the Windows architecture evolves, whereby definitions/implementations of objects may change. But, here the key is the underlying concept, not the described embodiments.

### EventMux

The EventMux object enables an application to create a single event sink for all notifications of structure or value changes instead of having one sink per object.

| Methods: | | |
|---|---|---|
| Name | Parameters | Description |
| NotifyStructureChange | [in] long Mask | Instructs the event mux to notify the sink when the structure of the system changes. The mask is the bitwise or of one or more of the following _PRODUCT _OBJECTCOLLECTION _OBJECT |
| Subscribe | [in] BSTR Product [in] BSTR ObjectCollection [in] BSTR Object [in] VARIANT Properties [in] BOOL Immediate | Instructs the event mux to notify the sink when the values of one or more an objects properties change. If the immediate flag is set an event is generated with the current values. |
| Unsubscribe | [in] BSTR Product [in] BSTR ObjectCollection [in] BSTR Object [in] VARIANT Properties | Notifies the mux that the client is no longer interested in the changes. |

| Events: | | |
|---|---|---|
| Name | Parameters | Description |
| Change | [in] BSTR Product [in] BSTR ObjectCollection [in] BSTR Object [in] VARIANT* Properties [in] VARIANT* Values | Notifies the sink of the change in one or more property values. |
| ObjectCreated | [in] BSTR Product [in] BSTR ObjectCollection [in] BSTR Object | Notifies the sink of an object creation. |
| ObjectCollectionCreated | [in] BSTR Product [in] BSTR ObjectCollection | Notifies the sink of an object collection creation. |
| ProductCreated | [in] BSTR Product | Notifies the sink of a product creation. |
| ObjectDeleted | [in] BSTR Product [in] BSTR ObjectCollection [in] BSTR Object | Notifies the sink of an object deletion |
| ObjectCollectionDeleted | [in] BSTR Product [in] BSTR ObjectCollection | Notifies the sink of an object collection deletion. |
| ProductDeleted | [in] BSTR Product | Notifies the sink of a product deletion. |

### Connection

The connection object manages the networking of products. An object will either be a listener or a connector. Listeners handle multiple connections from client machines, whilst connectors form the upstream connection link to a product.

| Methods: | | |
|---|---|---|
| Name | Parameters | Description |
| ConvertAddress | [in] BSTR Name [out,retval] long Address | Converts a node name or dot address into a number. |
| Send | [in] DWORD Cookie [in] long MsgId [in] BSTR Data [in] BOOL Synch | Sends a message to a remote machine identified by the cookie or to all connected machines if the cookie is zero. If Synch is true the method doesn't return until a response has been obtained from the remote machine. |
| Shutdown | | Stops the communication threads. |
| Startup | [in] BSTR Service [in] Long Function [in] BSTR Product [in] long Port [out,retval] long* Retval | Starts the communications threads and either listens on the port or attempts to connect to the machine which owns the product. |
| DeleteObjectCollection | [in] BSTR ObjectCollection | Delete the named objectcollection and removes it from the product. |
| Hookup | | Causes the product to start a connector to connect to the product owner. |

### Root

The Root is the controlling interface for the system. It manages flows of data to and from other machines and comprises a collection of products. It is derived from CBaseCollection and CCollectionMap.

| Properties: | | |
|---|---|---|
| Name | Type | Description |
| Broker | BOOL | Indicates whether this instance is a product broker. |

| Methods: | | |
|---|---|---|
| Name | Parameters | Description |
| CreateObject | [in] BSTR Product [in] BSTR ObjectCollection [in] BSTR Object [out,retval] IObject** Iobject | Creates a new object by name creating the hierarchy as required. |
| CreateObjectCollection | [in] BSTR Product [in] BSTR ObjectCollection [out,retval] IObjectCollection** IobjectCollection | Creates a new object collection by name. |
| CreateProduct | [in] BSTR Product [out,retval] Iproduct** Iproduct | Creates a new product and returns the interface pointer. |
| CreateObject | [in] BSTR Product [in] BSTR ObjectCollection [in] BSTR Object [out,retval] IObject** Iobject | Creates a new object by name and returns the interface. |
| DeleteObjectCollection | [in] BSTR ObjectCollection | Delete the named object collection and removes it from the product. |
| DeleteObject | [in] BSTR Product [in] BSTR ObjectCollection [in] BSTR Object | Deletes an object by name. |
| DeleteProduct | [in] BSTR Product | Deletes a product. |
| GetProduct | [in] BSTR Product [out,retval] IProduct** Iproduct | Returns a pointer to a named product. |
| GetProperty | [in] BSTR Product [in] BSTR ObjectCollection | Returns a pointer to a named property |
| | [in] BSTR Object [in] BSTR Property [out,retval] IProperty** IProperty | |
| Hookup | | Creates products from definitions in the local registry. Starts listeners for owned and proxied products and starts connectors for user and proxied products. |
| Load | [in] BSTR Database | Loads an object database file. |
| NetMsg | [in] DWORD Cookie [in] WORD MsgID [in] BSTR Data [in] BSTR Listener | Processes incoming messages from the network. |
| PropertiesSetValues | [in] BSTR Product [in] BSTR ObjectCollection [in] BSTR Object [in] VARIANT* Properties [in] VARIANT* Values | Sets the values of a series of properties on an object. |
| PropertyGetValue | [in] BSTR Product [in] BSTR ObjectCollection [in] BSTR Object [in] BSTR Property [out] VARIANT* Value | Returns the value of a property. |
| Shutdown | | Causes the program to terminate. |
| StartConnector | [in] BSTR Name, [in] BSTR Address [in] long Port [out,retval] long* Retval | Starts a connector to connect to a product owner. |
| StartProduct | [in] BSTR Product [in] BOOL Synch | Creates a product, starts a listener if the product is owned or proxied, starts a connector if the it is a user product. |
| StopProduct | [in] BSTR Product | Stops the listener or connector for this product. |
| StoreProduct | [in] BSTR Product [in] BSTR Filename | Store the complete product hierarchy in database file. |
| SynchProduct | [in] Product | Synchronizes the product with the owner. |
| SynchProperty | [in] BSTR Product [in] BSTR ObjectCollection [in] BSTR Object [in] BSTR Property | Synchronizes a property with the product owner. |

| Events: | | |
|---|---|---|
| Name | Parameters | Description |
| Change | BSTR ObjectCollection BSTR Object BSTR Property VARIANT Value | Fired on change in the value of a property owned by the product |
| ObjectCollectionCreated | BSTR ObjectCollection | Fired when an object collection is created. |
| ObjectCollectionDeleted | BSTR ObjectCoilection | Fired when an object collection is deleted. |
| ObjectCreated | BSTR ObjectCollection BSTR Object | Fired when a new object is created in an object collection. |
| ObjectCreated | BSTR ObjectCollection BSTR Object | Fired when an object is deleted in an object collection. |
| ProductCreated | BSTR Product | Fire when a new product is created. |

### Product

The Product is a collection of ObjectCollections. It is derived from CBaseCollection and CCollectionMap. A product is at the top of the object hierarchy and is the forms the entry point for inter machine communications.

| Properties: | | |
|---|---|---|
| Name | Type | Description |
| IsSysObject | BOOL | Indicates whether the product belongs exclusively to the local system and will not fire an event when changed. |
| Name | BSTR | The name of the product. |
| Parent | IRoot* | A pointer to the root of this instance of the objects program.. |

| Methods: | | |
|---|---|---|
| Name | Parameters | Description |
| CreateObjectCollection | [in] BSTR ObjectCollection [out,retval] IObjectCollecction** IobjectCollection | Creates a new object collection by name, add the object collection to the product and returns the interface pointer. |
| Synch | | Synchronizes this product with the product owner. |
| SynchSubscribe | | Synchronizes this product and subscribes to the product owner. |
| GetObjectCollection | [in] BSTR ObjectCollection [out,retval] IObjectCollection** IobjectCollection | Returns the interface pointer of the named object collection if it exists. |
| DeleteObjectCollection | [in] BSTR ObjectCollection | Delete the named object collection and removes it from the product. |
| Hookup | | Causes the product to start a connector to connect to the product owner. |

| Events: | | |
|---|---|---|
| Name | Parameters | Description |
| Change | BSTR ObjectCollection BSTR Object BSTR Property VARIANT Value | Fired on change in the value of a property owned by the product |
| ObjectCollectionCreated | BSTR ObjectCollection | Fired when an object collection is created. |
| ObjectCollectionDeleted | BSTR ObjectCollection | Fired when an object collection is deleted. |
| ObjectCreated | BSTR ObjectCollection BSTR Object | Fired when a new object is created in an object collection. |
| ObjectCreated | BSTR ObjectCollection BSTR Object | Fired when an object is deleted in an object collection. |

### ObjectCollection

The ObjectCollection comprises a collection of Objects. It is derived from CBaseCollection and CCollectionMap.

| Properties: | | |
|---|---|---|
| Name | Type | Description |
| IsSysObject | BOOL | Indicates whether the object belongs exclusively to the local system and will not fire an event when changed. |
| Name | BSTR | The name of the object collection. |
| Parent | Product* | The product that owns this object collection. |

| Methods: | | |
|---|---|---|
| Name | Parameters | Description |
| CreateObject | [in] BSTR Object [out,retval] IObject** Iobject | Creates a new object by name, add the object to the object collection and returns the interface pointer. |
| Synch | | Synchronizes this object collection with the product owner. |
| SynchSubscribe | | Synchronizes this object collection and subscribes to the product owner. |
| GetObject | [in] BSTR Object [out,retval] IObject** Iobject | Returns the interface pointer of the named object if it exists. |

| Events: | | |
|---|---|---|
| Name | Parameters | Description |
| Change | BSTR Object BSTR Property VARIANT Value | Fired on change in the value of a property owned by the object |

### Object

The Object comprises a collection of Properties. It is derived from CBaseCollection and CCollectionMap.

| Properties: | | |
|---|---|---|
| Name | Type | Description |
| IsSysObject | BOOL | Indicates whether the object belongs exclusively to the local system and will not fire an event when changed. |
| Name | BSTR | The name of the Property. |
| Parent | IObjectCollection* | The object collection that owns this object. |
| RemoteCookies | VARIANT Array of DWORD | The list of external connections that are interested in one or more of the properties of this object. |

| Methods: | | |
|---|---|---|
| Name | Parameters | Description |
| CreateProperty | [in] BSTR Property [out,retval] IProperty** IProperty | Creates a new property by name, add the property to the property collection and returns the interface pointer. |
| Synch | | Synchronizes this object with the product owner. |
| SynchSubscribe | | Synchronizes this object and subscribes to the product owner. |
| GetProperty | [in] BSTR Property [out,retval] IProperty** IProperty | Returns the interface pointer of the property if it exists. |
| PropertyGetValue | [in] BSTR Property [out,retval] VARIANT* Value | Returns the value of a named property. |
| PropertySetValue | [in] BSTR Property [in] VARIANT Value | Sets the value of a named property. |

| Events: | | |
|---|---|---|
| Name | Parameters | Description |
| Change | BSTR Property VARIANT Value | Fired on change in the value of a property owned by the object |

### Property

The property can be defined as the most "atomic" component in the system. It forms a part of a object property collection, and holds parameters/variables which are named property values.

| Properties: | | |
|---|---|---|
| Name | Type | Description |
| IsSysObject | BOOL | Indicates whether the property belongs exclusively to the local system and will not fire an event when changed. |
| LastUpdateCookie | DWORD | The cookie of the connection that last updated the property. This is used to prevent the property updates being mirrored to the connection that caused the update. |
| Value | VARIANT | The actual value of the property which may be a single value or an array. |
| Name | BSTR | The name of the property. |
| Parent | IxxxObject* | The object that owns this property. |
| SubCount | Long | The number of local subscribers to this property. This is used by the property to determine whether to subscribe or unsubscribe upstream. |

| Methods: | | |
|---|---|---|
| Name | Parameters | Description |
| InCount | Long Offset | Increments or decrements the SubCount property. |
| Synch | | Synchronizes this property with the product owner. |
| SynchSubscribe | | Synchronizes this property and subscribes to the product owner. |

| Member Functions: | | |
|---|---|---|
| Name | Parameters | Description |
| GetControl | | Set the member variables for the names and interface pointers of the parent chain up to the xxxRoot. |
| Subscribe | BOOL Subs | Subscribes or unsubscribes this property to the source. |

| Member Variables: | | |
|---|---|---|
| Name | Type | Description |
| Icontrol | ICONTROL* | Interface pointer to the control object. |
| m_pParent | IObject* | Pointer to the parent object. |
| Object | BSTR | Name of parent object |
| ObjectCollection | BSTR | Object collection to which the object belongs. |
| Product | BSTR | Product to which the object belongs. |

| Events: | | |
|---|---|---|
| Name | Parameters | Description |
| Change | VARIANT Values | Fired on change in the value of the property. |

Consider the application of objects according to the present invention to the problem of event ticketing provided by distributed computer systems 100. In order to avoid ticketing problems, e.g. a purchase of seats already sold, the participating event ticketing computer systems 100 are provided with actual ticketing data, e.g. seat reservations. As described below, the ticketing data is synchronized for all event ticketing computer systems 100 as soon as changes with respect to the ticketing data occur. Thus, each of the event ticketing software, which can be different software for the event ticketing computer systems 100, have access to updated, actual ticketing data.

The data shape of the objects reflect the real world shape of the auditorium and the venue. In the simplest mode, the object properties consist of seat availability, price, view restrictions. Client side displays will graphically show the layout of the auditorium and the seats still available. These will be updated instantaneously when any other client reserves or releases a seat.

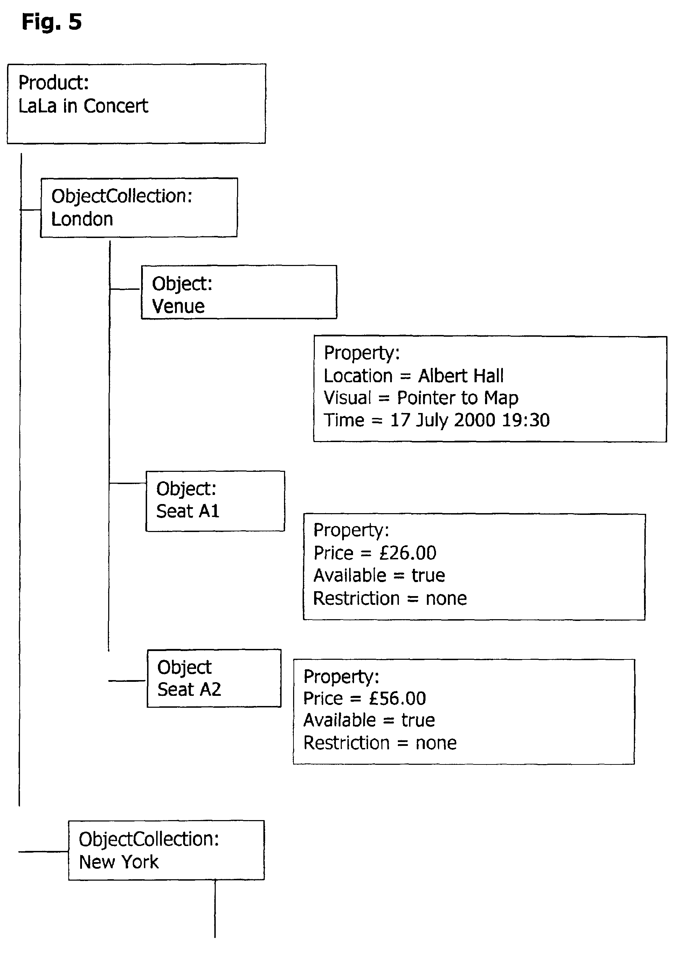

Fig. 5 shows a data model for the case of event ticketing for a worldwide tour by a popular singer. The data structure shown therein includes attributes for an implementation of an application for booking tickets for multiple venues in different countries.

Here, the product indicates concerts given by the singer LaLa. the "LaLa in concert" product is provided to all computer systems 100 connected via the network N as shown in Fig. 1.

Associated to the "LaLa in concert" product, object collections are employed being indicative of locations (cities) where concerts are given by the singer. In Fig. 5, object collections for London and New York are shown, while further object collections can be utilized, for example an "Amsterdam" object collection, a "Berlin" object collection, etc.

As explained above, each object collection comprises at least one object. The objects of this example are designated to the venues and specific seats for the respective object collection. For the "London" object collection, one "venue" object and two objects indicative of different seat categories available for the concert in London are used. Although not shown in Fig. 5, for the "New York" object collection two or more "venue" objects can be necessary in case the singer performs for example both in the Carnegie Hall and the Radio City Music Hall. Further, the number of "seat" objects can vary in dependence of available seat categories.

Associated with each object is at least one property for further characterizing the respective object. Here, the "venue" object of the "London" object collection comprises properties being indicative of the location (Albert hall) and the beginning time for the concert. The "visual" property includes a pointer to a map showing the actual seating arrangement in the location "Albert hall". The properties used for the "seat A1" object indicate the respective price, the availability thereof, restrictions thereon, and the specific location of seats for the seat A1 category.

Here, one advantage of the underlying approach becomes evident. Once a data model as the data structure shown in Fig. 5 is set up for a specific product, the components of the data structure relating to the product, namely object collections, objects, and properties can be easily duplicated, e.g. to include further cities where a concert of the respective performer is available. For a duplication of components of the data structure, it is only necessary to assign a specific content to data structure components without varying the data structure itself. So, it is possible to include further objects and/or properties or to exclude objects and/or properties for single object collections without interfering with other components or the data structure.

Assuming, one or several of the event ticketing computer systems 100 shown in Fig. 1 subscribe to the product "LaLa in concert", each event related to this product will result in a dissemination of respective information/data. For example, if the singer cancels a concert in a certain city, the venue in a city is changed, one or several beginning times of concerts are altered, or prices for seat categories are varied, in response thereto, the user is automatically provided respective information/data without the necessity to perform any interaction.

One benefit of the underlying approach is that a user of an event ticketing computer system 100 can pre-define the extend/scope of events he/she wishes to be informed of.

For example, in case several event ticketing computer systems 100 are serving London, they are usually not interested in events related to the concert in New York. In order to be provided with actual information/data related to the concert in London, event ticketing computer systems 100 for London will subscribe to the "London" object collection.

In case one of the event ticketing computer systems 100 has already reserved or purchased a seat, for example a seat in the seat category A1, only changes of the respective price and/or of the beginning time might be of interest. Than, this event ticketing computer system 100 has to subscribe to the "price" property and/or to the "time" property. As a result, it will be only informed of events associated with this (these) property(ies), while events related to further properties of the "London" object collection and events related to different object collections will not result in a notification of the user.

The hierarchical data structure provides, as explained above, different levels of data detail which can be pre-defined by means of subscribing to the desired data detail level. Since all events are multiplexed within the data structure hierarchy, a subscription to a certain level of data detail, for example subscribing to the data detail level "concert of LaLa in London", will result in a dissemination data related to the subscribed, pre-define data detail level and any event related to lower data detail levels.

The principles explained above with respect to one product and a respective data structure can be utilized for any product. In this context, the term "product" comprises not only physical objects but also the provision of services, information, data, and the like.

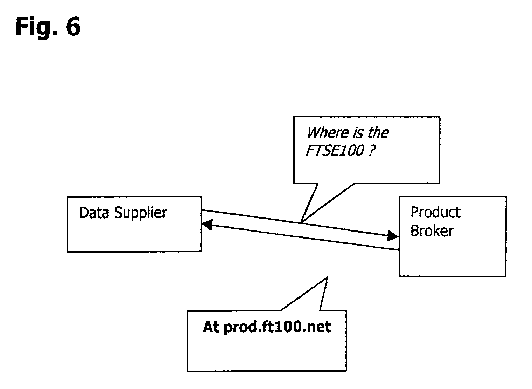

Further, it is pointed out that the data management system exemplary explained above and the methods used for operating the same can support multiple simultaneous products sourcing data from different cites, providers, computer systems, etc. In order to source data stored and disseminated within the data management system, a number of so-called brokers are implemented for managing and controlling employed data structures. Such brokers act as a database of different products including names, descriptions and network addresses of respective products. For example, a data supplier used for disseminating data on the basis of the data management system wants to provide data named "FTSE 100" sends a respective request to a product broker (Fig. 6). In response thereto, the product broker returns a network address, here the address "brod.ft100.net" specific for the requested data.

## Claims

1. A data management system for storing and disseminating data, comprising:
- at least one computer system (100), each being operated by an operating system,
- a first application software task being executed on one of said at least one computer systems (100) capable of transmitting data through said operating system,
- a second application software task being executed on one of said at least one computer systems (100) capable of receiving data through said operating system,
- data being stored in an addressable data storage structure allocated to said first application software task,
- at least one list of subscriptions associated to said data storage structure and being indicative of at least one data detail level with respect to said data storage structure pre-defined by said second application software task,
- means for detecting an event related to said data allocated to said first application software task, and
- means for disseminating event related data from said first application software task to said second application software task in case the detected event relates to data **characterized by** a respective one of said at least one data detail level pre-defined for said second application software task.

2. The data management system according to claim 1, comprising:
- said first application software task being adapted to receive data through said operating system,
- said second application software task being adapted to transmit data through said operating system,
- data being stored in said addressable data storage structure allocated to said second application software task,
- at least one list of subscriptions associated to said addressable date structure and being indicative of at least one data detail level with respect to said addressable data storage structure pre-defined by said first application software task,
- means for detecting an event related to said data allocated to said second application software task, and
- means for disseminating event related data from said second application software task to said first application software task in case the detected event relates to data **characterized by** a respective one of said at least one data detail level pre-defined for said first application software task.

3. The data management system according to claim 1 or 2, wherein data is interchanged between said first and second application software tasks in accordance with said at least one list of subscriptions.

4. The data management system according to one of the preceding claims, wherein said at least one list of subscriptions for said first application software task and/or said at least one list of subscriptions for said second application software task contains the first application software task and/or the second application software task as a recipient name for data from said addressable data storage structure at said at least one data detail level pre-defined by said first or second application software tasks.

5. The data management system according to one of the preceding claims, wherein said operating system supports remote and/or local procedure calls and/or procedure invocations .

6. The data management system according to one of the preceding claims, wherein
- the data is aggregated in object collections and/or used as single objects,
- each object collection and/or object has a designation and a collection of properties associated with it, and
- each property has a collection of one or more values.

7. The data management system according to one of the preceding claims, wherein
- at least one of said application software tasks has a connector instance adapted to communicate with said data allocated to one of said application software tasks.

8. The data management system according to one of the preceding claims, wherein
- said values comprises data and/or information including at least one of the forms of text, numbers, pointers to other objects, pointers to files, database mappings or pointers to streaming video or audio, multimedia-data, and alphanumerical and/or graphical data.

9. The data management system according to one of the preceding claims, wherein
- said data registers an interest of a user of one of said application software tasks in the changes applied to said data or at least parts thereof by adding the user's name and the changed data and/or further details of said data in which the user is interested to the subscription list.

10. The data management system according to one of the preceding claims, wherein
- upon occurrence of a change in said data, a database where the change occurred generates and issues an interrupt to a respective one of said computer systems (100) by calling a user-defined function or procedure with the parameters of the change to said data of interest on said respective computer system (100).

11. The data management system according to one of the preceding claims, wherein
- said data or at least parts thereof can receive or cause events which trigger application software tasks either in the same computer system (100) or an computer systems via a network (N) to perform some function on certain of said data as data changes occur.

12. The data management system according to one of the claims 6 to 11, wherein
- one or more data objects collections and/or objects and/or properties form one product being hosted by one or more server installations or product owners.

13. The data management system according to one of the preceding claims, wherein
- said data include a functionality which is built into an automation server which is responsible for data creation local for said at least one computer system (100), collection management and communication with data of said data management system.

14. The data management system according to claim 13, wherein
- events triggered by said data may either be sent out directly from said data to at least one of said application software tasks or multiplexed into the automation server which sends out a single generic event containing the identification of the sending data according to said at least one list of subscriptions.

15. The data management system according to one of the preceding claims, wherein
- said data or at least part thereof communicate with each other synchronously when said data or part thereof is required immediately or asynchronously dependent on external events.

16. The data management system according to one of the preceding claims, wherein
- all of said events are multiplexed within said addressable data storage structure.

17. A data management method for data synchronization, comprising:
- operating at least one computer system (100) by an operating system,
- executing a first application software task on one of said at least one computer systems (100) capable of transmitting data through said operating system,
- executing a second application software task on one of said at least one computer systems (100) capable of receiving data through said operating system,
- storing data in an addressable data storage structure allocated to said first application software task,
- associating at least one list of subscriptions to said data storage structure, said at least one list of subscriptions being indicative of at least one data detail level with respect to said data storage structure pre-defined by said second application software task,
- detecting an event related to said data allocated to said first application software task, and
- disseminating event related data from said first application software task to said second application software task in case the detected event relates to data **characterized by** a respective one of said at least one data detail level pre-defined for said second application software task.

18. The data management system according to claim 17, comprising:
- executing said first application software task being adapted to receive data through said operating system,
- executing said second application software task being adapted to transmit data through said operating system,
- storing data in said addressable data storage structure allocated to said second application software task,
- associating at least one list of subscriptions to said addressable date structure, said at least one list of subscriptions being indicative of at least one data detail level with respect to said addressable data storage structure pre-defined by said first application software task,
- detecting an event related to said data allocated to said second application software task, and
- disseminating event related data from said second application software task to said first application software task in case the detected event relates to data **characterized by** a respective one of said at least one data detail level pre-defined for said first application software task.

19. The data management system according to claim 17 or 18, wherein data is interchanged between said first and second application software tasks in accordance with said at least one list of subscriptions.

20. The data management method according to one of the claims 17 or 19, wherein said at least one list of subscriptions for said application software task contains the application software task as a recipient name for data from said addressable data storage structure at said at least one data detail level pre-defined by said application software tasks.

21. The data management method according to one of the claims 17 to 20, wherein said operating system supports remote and/or local procedure calls and/or procedure invocations .

22. The data management method according to one of the claims 17 to 21, wherein
- the data is aggregated in object collections and/or used as single objects,
- each object collection and/or object includes a designation and a collection of properties associated with it, and
- each property includes a collection of one or more values.

23. The data management method according to one of the claims 17 to 22, wherein
- said application software task utilizes a connector instance adapted to communicate with sources for said data of said data management method and/or a remote computer system.

24. The data management method according to claim 22 to 23, wherein
- said values comprises data and/or information including at least one of the forms of text, numbers, pointers to other objects, pointers to files, database mappings or pointers to streaming video or audio, multimedia-data, and alphanumerical and/or graphical data.

25. The data management method according to one of the claims 17 to 24, wherein
- said data registers an interest of a user of said application software task in the changes applied to said data or at least parts thereof by adding the user's name and the changed data and/or further details of said data in which the user is interested to said at least one subscription list.

26. The data management method according to one of the claims 17 to 25, wherein
- upon occurrence of a change in said data, a database where the change occurred generates and issues an interrupt to said computer systems (100) by calling a user-defined function or procedure with the parameters of the change to said data of interest on said computer system (100).

27. The data management method according to one of the claims 17 to 26, wherein
- said data or at least parts thereof can receive or cause events which trigger application software tasks either in said computer system (100) or on computer systems via a network (N) to perform some function on certain of said data as data changes occur.

28. The data management method according to one of the claims 17 to 27, wherein
- one or more data objects collections and/or objects and/or properties form one product are hosted by one or more server installations or product owners.

29. The data management method according to one of the claims 17 to 28, wherein
- said data include a functionality which is built into an automation server which is responsible for data creation local for said computer system (100), collection management and communication with said data of said data management method .

30. The data management method according to claim 29, wherein
- events triggered by said data may either be sent out directly from said data to said application software task or multiplexed into the automation server which sends out a single generic event containing the identification of the sending data according to said at least one list of subscriptions.

31. The data management method according to one of the claims 17 to 30, wherein
- said data or at least parts thereof communicate with each other synchronously when said data or at least parts thereof are required immediately or asynchronously dependent on external events.

32. The data management method according to one of the claims 17 to 31, wherein
- all of said events are multiplexed within said addressable data storage structure.
